(19) Europäisches Patentamt
European Patent Office
Office européen des brevets

(11) **EP 1 417 727 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **02750797.9**

(22) Anmeldetag: **19.06.2002**

(51) Int Cl.:
***H01M 10/44*** *(2006.01)*

(86) Internationale Anmeldenummer:
**PCT/DE2002/002240**

(87) Internationale Veröffentlichungsnummer:
**WO 2003/017412 (27.02.2003 Gazette 2003/09)**

(54) **VERFAHREN UND VORRICHTUNG ZUR DURCHFÜHRUNG EINES AUTOMATISCHEN LADEZUSTANDS-AUSGLEICHS**

METHOD AND DEVICE FOR CARRYING OUT AN AUTOMATIC CHARGE STATE COMPENSATION

PROCEDE ET DISPOSITIF POUR EFFECTUER UNE COMPENSATION AUTOMATIQUE D'ETAT DE CHARGE

(84) Benannte Vertragsstaaten:
**DE FR GB**

(30) Priorität: **08.08.2001 DE 10139048**

(43) Veröffentlichungstag der Anmeldung:
**12.05.2004 Patentblatt 2004/20**

(73) Patentinhaber: **ROBERT BOSCH GMBH**
**70442 Stuttgart (DE)**

(72) Erfinder: **BISCHOFF, Claus**
**71706 Markgroeningen (DE)**

(56) Entgegenhaltungen:
WO-A-99/22434          US-A- 4 684 814
US-A- 5 710 504        US-A- 6 064 178
US-A- 6 150 795        US-B1- 6 184 656
US-B1- 6 271 645

EP 1 417 727 B1

**Beschreibung**

Die Erfindung betrifft ein Verfahren und eine Vorrichtung zur Durchführung eines automatischen Ladezustandsausgleich.

Stand der Technik

Angesichts verschärfter Umweltgesetzgebung haben die meisten Automobilhersteller Prototypenfahrzeuge mit Hybridantrieben entwickelt. Derartige Fahrzeuge verfügen neben einem Kraftstofftank noch über einen elektrischen Energiespeicher zur Versorgung der elektrischen Antriebsaggregate.

Im Fahrbetrieb kommt diesem zusätzlichen Energiespeicher eine viel zentralere Rolle zu als bei konventionellen Fahrzeugen. So soll er Funktionen wie eine Bremsenergierekuperation, elektrisches Fahren, Boostbetrieb und den Antrieb elektrischer Nebenaggregate bei einem Motorstillstand und einen Motorstart ermöglichen.

Die hohen Anforderungen, die diese Funktionen an die Batterie stellen, machen einen Einsatz von Hochleistungsbatterien erforderlich.

In vielen Fällen wird in diesem Zusammenhang eine Nickelmetallhydrid-Batterie verwendet. Derartige Batterien verfügen über eine sehr hohe Leistungsdichte und sind sehr gut zyklisierbar. So sind sie in der Lage, im Kapazitätsbereich zwischen 30% und 70% mit der vollen Lade- und Entladeleistung zu arbeiten. Erreicht die Batterie Ladezustände von über 90%, müssen die Ladeströme stark heruntergeregelt werden. In diesen Zuständen können die Batteriezellen nur noch sehr schwache elektrische Leistungen aufnehmen. Dabei ist ihr Innenwiderstand derart hoch, dass sie überwiegend Wärme erzeugen. Würde man die Batterie mit zu starken Ladeströmen beaufschlagen, dann wäre man nicht mehr in der Lage, die entsprechenden Wärmeströme über eine Kühlungsvorrichtung abzuführen und die Zellen würden zerstört.

Aufgrund von Fabrikationstoleranzen und lokal schwankenden Umwelteinflüssen neigen die einzelnen Zellen von NiMH-Batterien besonders bei stark zyklischer Belastung zum Driften, d. h. der Ladezustand der einzelnen Zellen läuft auseinander. Wird der Drift im Betrieb zu groß, schränkt dieser die Leistungsfähigkeit der Batterie stark ein. Die Ursache hierfür wird nachfolgend anhand einer vereinfachten 3-Zellen-Batterie erläutert. In der Regel arbeitet ein der Batterie zugeordnetes Batteriemanagementsystem mit einem gemittelten Ladezustandswert SOC*, der dem Mittelwert der Ladezustände der Batteriezellen entspricht. Dieser gemittelte Ladezustandswert sei zu SOC*=70% angenommen. Bei einer idealen Batterie entspräche der Ladezustandswert der Zellen 1 - 3 auch dem gemittelten Ladezustandswert SOC*:

$$SOC_1 = SOC_2 = SOC_3 = SOC* \qquad (1)$$

Für eine reale Batterie tritt aber aus den oben genannten Gründen ein gewisser Drift auf, d. h. während das Batteriemanagementsystem nach wie vor mit dem gemittelten Ladezustandswert SOC*=70% arbeitet, weichen die Ladezustandswerte der einzelnen Zellen voneinander ab:

$$SOC_1 \neq SOC_2 \neq SOC_3 \neq SOC* \qquad (2)$$

Beispielsweise könnte der Ladezustandswert der einzelnen Batteriezellen beim Vorliegen geringen Drifts die folgenden Werte annehmen: $SOC_1 = 75\%$, $SOC_2 = 70\%$, $SOC_3 = 65\%$. Beim Vorliegen starken Drifts laufen die Ladezustandswerte der Batteriezellen weiter auseinander und haben beispielsweise folgende Werte: $SOC_1 = 95\%$, $SOC_2 = 70\%$, $SOC_3 = 45\%$. Der gemittelte Ladezustandswert SOC* beträgt dabei nach wie vor 70%.

Solange sich der Drift in engen Grenzen bewegt, hat er keine negativen Auswirkungen auf den Betrieb der Batterie. Wird die Batterie aber längere Zeit stark zyklisch beansprucht, dann kann auch bei mittleren Ladezustandswerten die nach oben weglaufende Batteriezelle 1 an das Überladelimit stoßen. Da dieser Zustand für die Batterie sicherheitskritisch ist, regelt das Batteriemanagementsystem den Ladestrom ab. Folglich kann die Batterie, die im Mittel nur 70% ihrer Nominalladung erreicht hat, nicht mehr weiter geladen werden.

Da dies eine sehr starke Einschränkung des Betriebsverhaltens bedeuten würde, nimmt man, sobald das Batteriemanagementsystem einen starken Drift detektiert, eine Ausgleichsladung vor. Bei einer solchen Ausgleichsladung werden die nachlaufenden Batteriezellen mit einem stark heruntergeregelten Strom $I_{Min}$ bis an die obere Ladezustandsschwelle nachgeführt.

Bei den bisher in Fahrzeugen eingesetzten NiMH-Batterien hat man diese Ausgleichsladung mit Hilfe eines an das Festnetz angeschlossenen Ladegerätes im Rahmen eines Fahrzeugservices vorgenommen. Diese aufwendige Prozedur ist erforderlich, da der Minimalstrorn $I_{Min}$ so definiert anliegen muss, dass die von den bereits voll geladenen Zellen abgegebene Wärme jederzeit über die Kühlung abgeführt werden kann.

Aus der US-PS 4,684,814 ist ein Fahrzeugbordnetz mit zwei Batterien, die zusammen ein Mehrspannungsbordnetz bilden und miteinander in Serie geschaltet sind, bekannt. Die beiden Batterien sind gleichartige Batterien, insbesondere Bleibatterien. Zur Optimierung der Spannungsversorgung findet ein automatischer Ladungsausgleich zwischen den beiden Batterien statt, der mit Hilfe einer Ansteuervorrichtung so durchgeführt wird, dass laufend ein Ladungsausgleich zwischen den beiden Batterien stattfindet.

Die US-PS 5,710,504 beschreibt ein Spannungsversorgungssystem für eine Last, bei dem eine Vielzahl von Batterien in Serie geschaltet ist und diese Batterien jeweils mit einem zugeordneten Kondensator aus einer Vielzahl von Kondensatoren verbindbar sind. Mit dieser Anordnung soll mittels geeigneter Ansteuerung der zwischen den Batterien und den Kondensatoren angeordneten Schalter sichergestellt werden, dass der Batterieladezustand der einzelnen Batterien ausgeglichen wird. Die Möglichkeit, dass die Ladezustände von Batteriezellen einer ersten Batterie mittels einer zweiten Batterie ausgeglichen werden sollen, ist der Druckschrift nicht zu entnehmen.

Die US-PS 6,184,656 beschreibt eine Energieversorgung für elektrische Geräte, beispielsweise zum Empfang von Radio-Frequenz-Signalen mit einer Vielzahl von Batterien und zugeordneten Steuermodulen. Die Batterien sind miteinander in Serie geschaltet und werden mit Hilfe einer übergeordneten Automatik zur Ladungssteuerung so betrieben, dass ein Ladungsausgleich erhalten wird.

Vorteile der Erfindung

Ein Verfahren und eine Vorrichtung gemäß der Erfindung weisen dem gegenüber den Vorteil auf, dass der Ladezustandsausgleich zwischen den Batteriezellen einer Fahrzeugbatterie bei Bedarf vollautomatisch erfolgt, ohne dass es einer Werkstatt und eines, an das Festnetz angeschlossenen, Ladegeräts bedarf. Dieser vollautomatische Ladungsausgleich erfolgt mit Hilfe des Bordnetzgenerators und einer Sekundärbatterie des jeweiligen Fahrzeugs, die die zum Ladungsausgleich benötigte elektrische Energie bereitstellen. Die Ablaufsteuerung und die Überwachung des Ladezustandsausgleichs wird von der Fahrzeugsteuerung und vom Batteriemanagementsystem übernommen. Dabei arbeitet das Bordnetz völlig autark.

Zeichnung

Nachfolgend wird anhand der Zeichnung ein Ausführungsbeispiel für die Erfindung näher erläutert. Die Figur 1 zeigt ein Ablaufdiagramm zur Veranschaulichung eines Verfahrens zur Durchführung eines automatischen Ladezustandsausgleichs. Die Figur 2 zeigt ein Blockschaltbild einer Vorrichtung zur Durchführung eines automatischen Ladezustandsausgleichs. Die Figur 3 zeigt ein Diagramm zur Veranschaulichung des Bellman-Prinzips.

Beschreibung

Bei dem nachfolgenden Ausführungsbeispiel wird davon ausgegangen, dass in einem Kraftfahrzeug eine drei Batteriezellen aufweisende Hochleistungs- bzw. Traktionsbatterie vorgesehen ist, wobei im Fahrzeugbetrieb der Ladezustand der Batteriezellen aufgrund einer zyklischen Belastung stark auseinanderläuft. Während dieses Fahrzeugbetriebes wird eine an Bord des Fahrzeugs befindliche Sekundärbatterie durch den Fahrzeuggenerator geladen. Diese Sekundärbatterie kann deutlich kleiner dimensioniert sein als die Hochleistungs- bzw. Traktionsbatterie, muss aber über einen ausreichenden Energieinhalt verfügen. Bei dieser Sekundärbatterie kann es sich beispielsweise um eine AGM-Bleisäurebatterie handeln.

Während des Fahrzeugbetriebes erfolgt auch eine Ladung der Hochleistungs- bzw. Traktionsbatterie, die als NiMH-Batterie ausgeführt ist. Sie verlässt bei dieser Ladung den Sollladezustand für den Normalbetrieb, der im Regelfall bei 50% bis 60% liegt und erreicht einen kritischen Ladezustandsbereich, der bei ca. 95% liegt. Ist dieser Bereich erreicht, dann werden die Ladeströme vom Batteriemanagementsystem so eingestellt, dass ein möglichst hoher Ladewirkungsgrad erzielt wird.

Da die NiMH-Batterie in diesem Ladezustandsbereich keine größeren Ladeströme mehr aufnehmen kann, muss das Batteriemanagementsystem die Batterieladeströme strikt begrenzen. Dies hat zur Folge, dass die Fahrzeugsteuerung vorübergehend auf die Bremsenergierekuparation verzichten muss. In Entladerichtung bleibt die Batterie allerdings voll einsatzfähig, beispielsweise zu einem Starten des Motors.

Erkennt das Batteriemanagementsystem die Notwendigkeit eines Ladezustandsausgleichs, dann kann dieser durchgeführt werden. Dabei wird detektiert, dass das Fahrzeug über einen längeren Zeitraum abgestellt ist, beispielsweise durch eine Detektion, ob das Fahrzeug im abgestellten Zustand verriegelt wird. Anschließend werden über einen Widerstand die zum Heranführen bzw. Aufladen der einen geringeren Ladezustand aufweisenden Zellen erforderlichen Minimalströme von der Sekundärbatterie an die NiMH-Batterie abgegeben. Erkennt das Batteriemanagementsystem, dass alle Zellen der NiMH-Batterie ihre obere Ladezustandsschwelle erreicht haben, dann schaltet es wieder auf Normalbetrieb um.

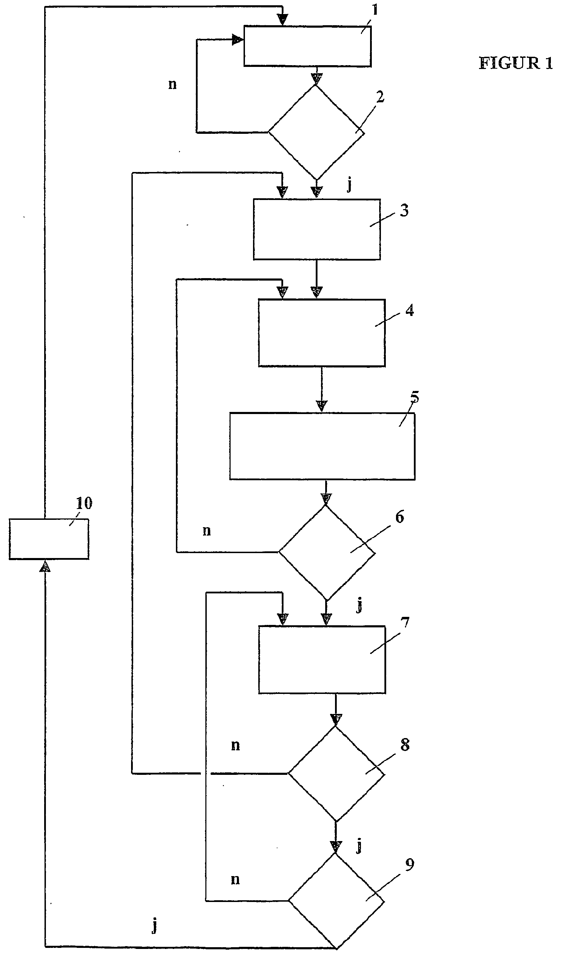

Ein derartiger Ladezustandsausgleich wird nachfolgend anhand des in der Figur 1 gezeigten Ablaufdiagramms näher erläutert.

Im Schritt 1 befindet sich das Fahrzeug im Normalbetrieb, in welchem die Ladezustände der einzelnen Batteriezellen der Hochleistungs- bzw. Traktionsbatterie ggf. auseinanderlaufen können.

Im Schritt 2 erfolgt eine Abfrage, ob ein Ladezustandsausgleich notwendig ist oder nicht. Diese Abfrage wird vom Batteriemanagementsystem vorgenommen. Hat die Abfrage zum Ergebnis, dass kein Ladezustandsausgleich notwendig ist, wird zum Schritt 1 zurückgekehrt. Wird ein Ladezustandsausgleich als notwendig angesehen, wird zum Schritt 3 übergegangen.

Im Schritt 3 wird die Sekundärbatterie vom Fahrzeuggenerator in ihren vollen Ladezustand gebracht. Im nachfolgenden Schritt 4 wird die Hochleistungs- bzw. Traktionsbatterie in Ladebereitschaft gebracht. Danach erfolgt im Schritt 5 ein Außerkraftsetzen derjenigen Fahrfunktionen des Kraftfahrzeugs, welche hohe Batterieladeströme bedingen, beispielsweise eine Bremsenergierekuperation.

Anschließend erfolgt im Schritt 6 eine Abfrage, ob das Fahrzeug abgestellt ist. Ist dies nicht der Fall, dann wird zum Schritt 4 zurückgekehrt. Ist das Fahrzeug hingegen abgestellt, dann wird zum Schritt 7 übergegangen.

Im Schritt 7 erfolgt eine Nachladung bzw. eine Heranführung der weniger geladenen Batteriezellen der Traktionsbatterie mit Ladestrom aus der Sekundärbatterie.

Im Schritt 8 wird eine Abfrage vorgenommen, ob das Fahrzeug weiterhin abgestellt ist oder nicht. Ist das nicht der Fall, wird zum Schritt 3 zurückgekehrt. Ist das Fahrzeug hingegen weiterhin abgestellt, erfolgt im Schritt 9 eine weitere Abfrage, ob der Ladezustandsausgleich abgeschlossen ist oder nicht. Ist dies nicht der Fall, wird zum Schritt 7 zurückgekehrt.

Ist hingegen der Ladezustandsausgleich abgeschlossen, dann wird im Schritt 10 die Ladebereitschaft der Traktionsbatterie aufgehoben bzw. der Ladezustand auf das normale Ladezustands-Betriebsfenster zurückgeführt. Danach wird zum Schritt 1 zurückgekehrt, d. h. in den Normalbetrieb.

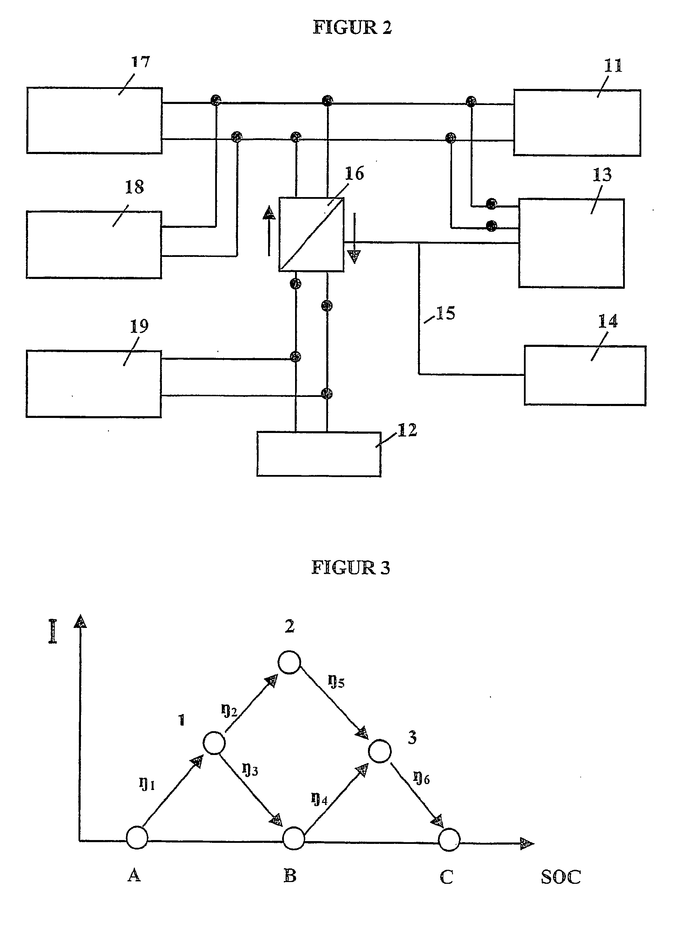

Die Figur 2 zeigt ein Blockschaltbild einer Vorrichtung zur Durchführung eines automatischen Ladezustandsausgleich bei einem Kraftfahrzeug mit einem Zweispannungsbordnetz, beispielsweise einem 14V/42V-Bordnetz.

Das gezeigte Bordnetz weist eine 26 Ah-NiMH-Traktionsbatterie 11 auf, an der bzw. an deren Zellen der Ladezustandsausgleich durchgeführt werden soll. Diese Traktionsbatterie 11 ist Bestandteil des 42-Bordnetzes, dem weiterhin ein 42V-Verbraucher 17 und eine E-Maschine 18 angehören.

Eine weiterhin im Fahrzeug befindliche Bleisäurebatterie 12, die Bestandteil des 14V-Bordnetzes ist, dient als Sekundärbatterie. Diese Sekundärbatterie wird - wie oben beschrieben wurde - zum Ladezustandsausgleich verwendet, wobei die Verbindung der beiden Bordnetzteile über einen bidirektionalen Gleichspannungswandler 16 erfolgt.

Im Rahmen dieses Ladezustandsausgleichs ist es notwendig, die Traktionsbatterie 11 von einem vorliegenden Ausgangsladezustand in einen Ziel-Ladezustandsbereich zu bringen, der in der Regel größer als 95% ist. In diesem Ziel-Ladezustandsbereich hat die Batteriezelle mit dem höchsten Ausgangs- bzw. Anfangsladezustand einen Ladezustand von beispielsweise 100% erreicht. Die Ladezustandsanpassung bzw. -verlagerung kann mit Hilfe des Bellman-Prinzips wirkungsgradoptimiert durchgeführt werden. Diese Bellman-Prinzip besagt, dass der optimale Weg von einem Ausgangs- zu einem Endzustand sich aus der Summe der optimalen Schritte entlang von Zwischenzuständen ergibt.

Dies wird anhand der Figur 3 erläutert, in welcher entlang der Ordinate der Ladestrom I und entlang der Abszisse der Ladezustand SOC aufgetragen ist. Gilt für die in der Figur 3 gezeigte Abbildung die Beziehung

$$\eta_1 \cdot \eta_2 \cdot \eta_4 \cdot \eta_6 > \eta_1 \cdot \eta_2 \cdot \eta_5 \cdot \eta_6,$$

dann ist der Weg

$$A - 1 - B - 3 - C$$

der wirkungsgradoptimierte Weg von A nach C, wobei

$$\eta_1, \ldots, \eta_6$$

Wirkungsgradangaben entlang der Zwischenzustände sind.

Auf die gleiche Weise kann Offline für jeden möglichen Ladezustandsanpassungsschritt eine wirkungsgradoptimierte Ladestrategie, d. h. ein wirkungsgradoptimierter Ladestrom, ermittelt werden. Die zum jeweiligen Ladeschritt gehörigen optimalen Ströme I werden im Batteriemanagementsystem 13 abgelegt. Ist der Ladezustand der Batterie im Rahmen des Ladezustandsausgleichs anzuheben, dann kann der Ladezustand im Sinne einer jeweils optimierten Ladekennlinie nachgeführt werden, im obigen Beispiel anhand der Ladekennlinie

$$A - 1 - B - 3 - C.$$

Zum eigentlichen Ladezustandsausgleich sendet das Batteriemanagementsystem 13, welches die Notwendigkeit eines Ladezustandsausgleich detektiert hat, über den CAN-Bus 15 des Fahrzeugs ein Statusflag an das Fahrzeugsteuergerät 14. Dieses prüft, ob der Ladezustandsausgleich durchgeführt werden kann, setzt - wenn dies der Fall ist - die Bremsenergierekuparation außer Kraft und schickt über den CAN-Bus 15 ein Freigabesignal an das Batteriemanagement 13.

Daraufhin bringt das Batteriemanagement 13 die Traktionsbatterie 11 in den Ladebereitschaftsbetrieb, indem es das Betriebsfenster der Batterie aus dem mittleren Ladezustandsbereich verschiebt und solange, bis eine der Batteriezellen einen Ladezustand von etwa 100% erreicht hat, eine Ladungsaufnahme zulässt.

Dabei erhält die als Generator arbeitende E-Maschine 18 vom Fahrzeugsteuergerät 14 den Auftrag, mit einem zusätzlichen Leistungspaket die Traktionsbatterie 11 in den erhöhten Ladezustand und über den bidirektionalen Gleichspannungswandler 16 die Bleisäurebatterie 12 in einen vollgeladenen Zustand zu bringen und dort zu halten. Dabei kann das Batteriemanagement 13 die Ladeströme beider Batterien nach den offline-berechneten Vorgaben über das Fahrzeugsteuergerät 14 und den Gleichspannungswandler 16 einstellen.

Wird das Fahrzeug im abgestellten Zustand verriegelt, erfolgt der eigentliche Ladezustandsausgleich, bei welchem die Bleisäurebatterie 12 über den Gleichspannungswandler 16 den für den Ladezustandsausgleich erforderlichen Strom abgibt, welcher im Bereich von etwa 3 - 5 A liegt. Da sich während dieses Ladezustandsausgleichs sowohl das 14V-Bordnetz als auch das 42V-Bordnetz im Ruhezustand befinden, in welchem keine dynamischen Belastungen durch andere Verbraucher auftreten, kann der zum Ladezustandsausgleich nötige Strom sehr gut und genau eingestellt werden.

Haben alle Batteriezellen ihre obere Ladezustandsschwelle von etwa 100% erreicht, dann meldet das Batteriemanagement 13 das Ende des Ladezustandsausgleichsvorgangs, indem es ein Statusflag auf dem CAN-Bus 15 bereitstellt. Anschließend verlegt das Batteriemanagement 13 das Ladezustands-Betriebsfenster wieder in den normalen Arbeitsbereich, in welchem wieder eine stärkere Entladung der Batterie zugelassen ist. Die Fahrzeugsteuerung 14 deaktiviert das zusätzliche, von den E-Maschinen 18 für die Einleitung des Ladezustandsausgleichs angeforderte Leistungspaket.

Wird das Fahrzeug wieder in Betrieb genommen, bevor der Ladezustandsausgleich beendet ist, dann bricht die Fahrzeugsteuerung 14 den Ladezustandsausgleich ab. Sie sorgt jedoch zusammen mit dem Batteriemanagement 13 nach erfolgtem Start des Verbrennungsmotors dafür, dass die NiMH-Batterie 11 sobald wie möglich wieder in den erhöhten und die Sekundärbatterie 12 in den vollen Ladezustand gebracht wird. Auf diese Weise kann, sobald das Fahrzeug erneut abgestellt wird, ein neuer Versuch eines Ladezustandsausgleichs in die Wege geleitet werden.

**Patentansprüche**

1. Verfahren zur Durchführung eines Ladezustandsausgleichs zwischen den Zellen einer mehrere Zellen aufweisenden Fahrzeugbatterie mit folgenden Schritten:

   Aufladen einer Sekundärbatterie des Fahrzeugs während des Fahrtbetriebes,
   Detektion der Notwendigkeit eines Ladezustandsausgleichs der Zellen der Fahrzeugbatterie während des Fahrtbetriebes,
   Verbringen der Fahrzeugbatterie in den Ladebereitschaftszustand,
   Prüfen, ob ein Ladezustandsausgleich durchgeführt werden kann,
   Zuführen eines Ladestromes von der Sekundärbatterie zur Fahrzeugbatterie und Durchführung des Ladezustandsausgleichs in den Zellen der Fahrzeugbatterie.

2. Verfahren nach Anspruch 1, **dadurch gekennzeichnet, dass** bei der Prüfung, ob ein Ladezustandsausgleich durchgeführt werden kann, überprüft wird, ob das Fahrzeug im abgestellten Zustand verriegelt ist.

**3.** Verfahren nach Anspruch 1 oder 2, **dadurch gekennzeichnet, dass** zwischen der Detektion der Notwendigkeit eines Ladezustandsausgleichs und dem Zuführen des Ladestroms von der Sekundärbatterie zur Fahrzeugbatterie Fahrzeugfunktionen, die hohe Batterieladeströme bedingen, deaktiviert werden.

**4.** Verfahren nach einem der vorhergehenden Ansprüche, **dadurch gekennzeichnet, dass** nach dem Beginn des Zuführens des Ladestroms von der Sekundärbatterie zur Fahrzeugbatterie wiederholt überprüft wird, ob der Ladezustandsausgleich fortgesetzt werden kann, und wenn dies der Fall ist, der Ladezustandsausgleich fortgesetzt wird, und wenn dies nicht der Fall ist, der Ladezustandsausgleich unterbrochen wird.

**5.** Verfahren nach einem der vorhergehenden Ansprüche, **dadurch gekennzeichnet, dass** nach dem Beginn des Zuführens des Ladestroms von der Sekundärbatterie zur Fahrzeugbatterie wiederholt überprüft wird, ob der Ladezustandsausgleich abgeschlossen ist, und wenn dies der Fall ist, der Ladebereitschaftszustand der Fahrzeugbatterie aufgehoben wird, und wenn dies nicht der Fall ist, die Durchführung des Ladezustandsausgleichs fortgesetzt wird.

**6.** Verfahren nach einem der vorhergehenden Ansprüche, **dadurch gekennzeichnet, dass** die einzelnen Schritte des Verfahrens automatisch ablaufen.

**7.** Verfahren nach Anspruch 6, **dadurch gekennzeichnet, dass** die einzelnen Schritte des Verfahrens automatisch unter Steuerung durch eine Steuereinheit ablaufen.

**8.** Verfahren nach Anspruch 7, **dadurch gekennzeichnet, dass** die einzelnen Schritte des Verfahrens automatisch unter Steuerung durch eine Steuereinheit ablaufen, welche das Batteriemanagement und das Fahrzeugsteuergerät das Fahrzeugs aufweist.

**9.** Vorrichtung zur Durchführung eines Ladezustandsausgleichs zwischen den Zellen einer mehrere Zellen aufweisenden Fahrzeugbatterie (11), mit
einer fahrzeugseitigen Sekundärbatterie (12), und
einer fahrzeugseitigen Steuereinheit (13, 14), die dazu
dient, die Notwendigkeit eines Ladezustandsausgleichs in den Zellen der Fahrzeugbatterie (11) zu erkennen, die Fahrzeugbatterie (11) in den Ladebereitschaftszustand zu bringen, zu prüfen, ob ein Ladezustandsausgleich durchgeführt werden kann, und die Zuführung eines Ladestroms von der Sekundärbatterie (12) zu den Zellen der Fahrzeugbatterie (11) zu steuern.

**Claims**

**1.** Method for carrying out a charge state compensation between the cells of a vehicle battery having a plurality of cells, comprising the following steps:

charging of a secondary battery of the vehicle during the travel mode,
detection of the necessity of a charge state compensation of the cells of the vehicle battery during the travel mode,
placing of the vehicle battery in the charge standby state,
checking whether a charge state compensation can be carried out,
supplying of a charge current from the secondary battery to the vehicle battery and execution of the charge state compensation in the cells of the vehicle battery.

**2.** Method according to Claim 1, **characterized in that** during the checking as to whether a charge state compensation can be carried out, it is checked whether the vehicle is locked in the deactivated state.

**3.** Method according to Claim 1 or 2, **characterized in that** vehicle functions which require high battery charge currents are deactivated between the detection of the necessity of a charge state compensation and the supplying of the charge current from the secondary battery to the vehicle battery.

**4.** Method according to one of the preceding claims, **characterized in that** after the start of the supplying of the charge current from the secondary battery to the vehicle battery it is checked repeatedly whether the charge state compensation can be continued, and if this is the case the charge state compensation is continued, and if this is not the case the charge state compensation is interrupted.

**5.** Method according to one of the preceding claims, **characterized in that** after the start of the supplying of the charge current from the secondary battery to the vehicle battery it is repeatedly checked whether the charge state compensation is terminated, and if this is the case the charge standby state of the vehicle battery is cancelled, and if this is not the case the execution of the charge state compensation is continued.

**6.** Method according to one of the preceding claims, **characterized in that** the individual steps of the method take place automatically.

**7.** Method according to Claim 6, **characterized in that** the individual steps of the method take place automatically under the control of a control unit.

**8.** Method according to Claim 7, **characterized in that** the individual steps of the method take place automatically under the control of a control unit which has the battery management and the vehicle control device of the vehicle.

**9.** Device for carrying out a charge state compensation between the cells of a vehicle battery (11) having a plurality of cells, having a vehicle-end secondary battery (12) and
a vehicle-end control unlit (13, 14) which
serves to detect the necessity for a charge state compensation in the cells of the vehicle battery (11), to place the vehicle battery (11) in the charge standby state, to check whether a charge state compensation can be carried out and to control the supplying of a charge current from the secondary battery (12) to the cells of the vehicle battery (11).

**Revendications**

**1.** Procédé de compensation d'un état de charge de cellules d'une batterie de véhicule à plusieurs cellules comprenant les étapes suivantes :

- chargement d'une batterie secondaire du véhicule pendant le fonctionnement du véhicule,
- détection de la nécessité d'une compensation de l'état de charge des cellules de la batterie du véhicule pendant le fonctionnement du véhicule,
- mise de la batterie du véhicule dans l'état préparatoire de charge,
- contrôle de la possibilité d'effectuer une compensation de charge,
- fournir un courant de charge de la batterie secondaire à la batterie du véhicule et compenser l'état de charge dans les cellules de la batterie du véhicule.

**2.** Procédé selon la revendication 1,
**caractérisé en ce que**
lorsqu'on contrôle si l'on peut effectuer une compensation de charge, on vérifie si le véhicule est verrouillé à l'arrêt.

**3.** Procédé selon la revendication 1 ou 2,
**caractérisé en ce qu'**
entre la détection de la nécessité d'une compensation de l'état de charge et la fourniture du courant de charge de la batterie secondaire vers la batterie du véhicule, on neutralise les fonctions du véhicule consommant un fort courant de batterie.

**4.** Procédé selon l'une des revendications précédentes,
**caractérisé en ce qu'**
après le début de l'alimentation du courant de charge à partir de la batterie secondaire vers la batterie du véhicule, on vérifie de manière répétée si l'on peut poursuivre la compensation de l'état de charge et si cela est le cas on poursuit la compensation de l'état de charge et si cela n'est pas le cas on interrompt la compensation de l'état de charge.

**5.** Procédé selon l'une des revendications précédentes,
**caractérisé en ce qu'**
après le début de l'alimentation du courant de charge par la batterie secondaire vers la batterie du véhicule, on vérifie de manière répétée si la compensation de l'état de charge est terminée et si cela est le cas, on neutralise l'état préparatoire de charge de la batterie du véhicule et si cela n'est pas le cas, on poursuit la compensation de l'état de charge.

**6.** Procédé selon l'une des revendications précédentes,
**caractérisé en ce que**
les différentes étapes du procédé se déroulent automatiquement.

**7.** Procédé selon la revendication 6,
**caractérisé en ce que**
les différentes étapes du procédé se déroulent automatiquement sous la commande d'une unité de commande.

**8.** Procédé selon la revendication 7,
**caractérisé en ce que**
les différentes étapes du procédé se déroulent automatiquement sous la commande d'une unité de commande, cette unité assurant la gestion de batterie et comprenant l'appareil de commande du véhicule.

**9.** Dispositif pour la mise en oeuvre d'une compensation de charge des cellules d'une batterie de véhicule (11) à plusieurs cellules, comprenant
une batterie secondaire (12) côté véhicule et
une unité de commande (13, 14) côté véhicule servant à reconnaître la nécessité d'une compensation de l'état de charge dans les cellules de la batterie (11) du véhicule, à mettre la batterie (11) du véhicule dans un état prêt à la charge et à vérifier si l'on peut effectuer une compensation d'état de charge et fournir le courant de charge à partir de la batterie secondaire (12) aux cellules de la batterie du véhicule (12) en commandant le courant de charge.

FIGUR 1

## FIGUR 2

## FIGUR 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4684814 A
- US 5710504 A
- US 6184656 B